# EUROPEAN PATENT SPECIFICATION

(11) **EP 2 966 213 B1**
(45) Date of publication and mention of the grant of the patent: **16.06.2021**
(21) Application number: 14176606.3
(22) Date of filing: 10.07.2014
(51) Int. Cl.: A47L 15/00, A47L 15/46, D06F 33/00, D06F 39/08, H02H 9/00, H05B 1/02, D06F 37/28, D06F 37/30, D06F 39/04, H02K 11/25, G05B 9/02

(54) **Electrical appliance with an electrical resistance heating element and method for operating an electrical appliance**
Elektrische Vorrichtung mit einem elektrischen Widerstandsheizelement und Verfahren zum Betrieb einer elektrischen Vorrichtung
Appareil électrique avec un élément chauffant à résistance électrique et procédé pour faire fonctionner un tel appareil

(43) Date of publication of application: 13.01.2016
(73) Proprietor: E.G.O. Elektro-Gerätebau GmbH, 75038 Oberderdingen (DE)
(72) Inventor: Torres Sanchez, Antoni, 08520 Barcelona (ES)
(74) Representative: Patentanwälte Ruff, Wilhelm, Beier, Dauster & Partner mbB

(56) References cited:
- EP-A1- 2 586 898

## Description

### Field of application and prior art

The invention is directed to an electrical appliance with an electrical resistance heating element and an electrical load such as an electrical motor. The invention is also directed to a method for controlling an electrical appliance.

It is commonly known in electrical appliances, such as for example washing machines, that when a discharge capacitor is connected to the AC main circuit, a high initial current appears. This is the so-called inrush current. Just some milliseconds after the connection to the main circuit, the inrush current can be much higher than the nominal current of the electrical appliance, for example up to 40 times higher.

This problem should be avoided and must be avoided according to European appliance standards. Usually a current limiter component such as a large and robust resistor is connected in series with the discharge capacitor. This can also be an NTC element for limiting the capacitor charge current.

From EP 2586898 A1 an inrush current control system for an electrical appliance is known. The electrical appliance is provided with an electrical resistance heating element and an electrical load. For switching on the electrical appliance, the electrical resistance heating element is connected in series with the electrical load to a feed voltage.

### Problem and solution

The problem underlying the invention is to provide an electrical appliance as well as a method for controlling an electrical appliance wherein the effort and the number of necessary components for limiting the current or inrush current, respectively, when connecting the appliance to the main circuit are reduced, and wherein preferably the reliability is maintained.

This problem is solved by an electrical appliance according to the features of claim 1 as well as a method for controlling such an electrical appliance with the features according to claim 9. Advantageous and preferred configurations of the invention form the subject matter of the rest of the claims and will be explained in more detail hereinbelow. Some features here are only mentioned in detail with respect of the electrical appliance itself or of a method for controlling such an electrical appliance. Irrespective of this, however, they should be allowed to apply not only to the electrical appliance but also to the method for controlling such an electrical appliance. The wording of the claims is made the content of the description by express reference.

The electrical appliance is provided with an electrical resistance heating element, which has two connectors. A first connector of the electrical resistance heating element is connected to a first pole of the feed voltage, which usually is the main circuit. A second connector of the electrical resistance is connected to the input of a switching means. Furthermore, the electrical appliance is provided with an electrical load such as an electrical motor. The switching means of the invention are a so-called two way switching means. It has one input and two outputs, wherein the input can be switched to either one of the outputs. The first output is connected to the electrical load and/or to power regulating means for the electrical load, such as power electronics. The second output is connected to a second pole of the feed voltage.

With the invention, it is possible to connect the electrical resistance heating element, which is used for heating the water in a washing machine or a dishwashing machine, in series to the electrical load or to power regulating means for the electrical load, such as a rectifier bridge or power electronics. The electrical resistance heating element works as an inrush current limiting resistor as explained before. It can be designed for an electrical power of about 2.000 W or 3.000 W, which makes it robust enough to stand the inrush current. After the inrush current pulse has ceased again, the switching means can disrupt the series connection of the electrical resistance heating element to the electrical load or its power regulating means so that, whenever there is the need for having the electrical resistance heating element work to heat, it can be connected directly to the feed voltage of the main circuit for its heating function, preferably for heating water as explained before.

As in some electrical appliances such as a washing machine or a dishwashing machine this electrical resistance heating elements is provided anyway, as well as a switching means for switching on or off the heating element, no additional components are needed. Only the switching means must be changed from a simple connector/disconnector to the one explained before in the form of a two-way-switching means.

In one embodiment of the invention, the switching means is an electro-mechanical magnetic relay. They are known for their simple construction, low cost and robust as well as reliable function.

In an alternative embodiment, the switching means comprises at least one triac. Preferably, the switching means comprises two or three Triacs, which are also arranged to work as a two-way switch.

If power regulating means for the electrical load are provided, they can preferably be in the form of a rectifier bridge. The first output of the switching means is connected to a first input of the rectifier bridge. A second input of the rectifier bridge is connected to the second pole of the feed voltage or the main circuit, respectively. A capacitor, preferably a DC line capacitor, for example a discharge capacitor, is provided in parallel to the electrical load and in parallel to two outputs of the rectifier bridge. In this case, the electrical load preferably is an electrical motor, but could also be a power generator for induction coils of an inductive cooking field.

In a preferred embodiment, the electrical resistance heating element is for heating the water in the electrical appliance. The electrical load can be a drive motor. One possible application is a washing machine, wherein the drive motor drives the drum of the washing machine, or the drive motor is a pump motor of a pump of the washing machine. Another application is a dishwashing machine, wherein the motor is a pump motor of a pump for pumping water through the dishwashing machine or its rotating washer arms, respectively. Other applications or electrical appliances can also be provided with the invention for avoiding the problem of a high inrush current, especially if they are provided with an electrical resistance heating element.

In the invention, when used in a washing machine or a dishwashing machine, a bridge switching means is provided. This bridge switching means is connected with the first side with the first pole of the feed voltage and with its second side is connected with the first output of the two-way switching means. The bridge switching means is a mechanical or an electro-mechanical switch. In the washing machine or also in the dishwashing machine, this switch is a so-called door lock switch.

Preferably, an additional on/off switching means is provided between the first output of the two-way switching means and the input of the electrical load or a regulating means for the electrical load. This on/off switching means can be the only electrical connection between the first output of the two way switching means and the electrical load or the regulating means, respectively. This is a simple and effective way to turn on the electrical load or the regulating means, or turn them off.

In a method for controlling an electrical appliance, for example a house hold appliance as explained before, the electrical appliance is provided with an electrical resistance heating element and an electrical load. For switching on the electrical appliance, the electrical resistance heating element is connected in series with the electrical load or a bulk or DC capacitor for the electrical load to a feed voltage. The electrical resistance heating element can then work as a current limiter and may advantageously be a resistance. After the electrical appliance has been switched on, a high current in the capacitor has diminished again, and then the series connection of the electrical resistance heating element and the electrical load or a regulating means therefore, respectively, can be interrupted again. The electrical resistance heating element can then be operated independently from the electrical load or its regulating means. Because the time for this consuming of the inrush current in the electrical resistance heating element is only very short, usually no more than some seconds or preferably less than one second, the electrical resistance heating element will not produce substantial heating energy and, consequently, will not cause any harm or disturbance by that.

These and further features can be gathered not only from the claims but also from the description and the drawings, wherein the individual features can in each case be realized on their own or several combined together in an embodiment of the invention and in other areas and can constitute advantageous and independently patentable configurations for which protection is claimed here. Subdividing the application into sub-headings and individual sections does not restrict the general validity of what is said therebeneath or therein.

### Short description of the drawings

Some embodiments of the invention are shown in the drawings and are explained hereinafter. In the drawings show:
- Fig. 1: the prior art with a triac and a control circuit,
- Fig. 2: the prior art with an inrush current resistor,
- Fig. 3: the prior art with a NTC inrush current resistor,
- Fig. 4: the invention implemented in a wiring architecture as a basic circuit,
- Fig. 5: the basic circuit of Fig. 4 with an additional on/off relay and
- Fig. 6: a washing machine as an electrical appliance according to the invention.

### Detailed description of the exemplary embodiments

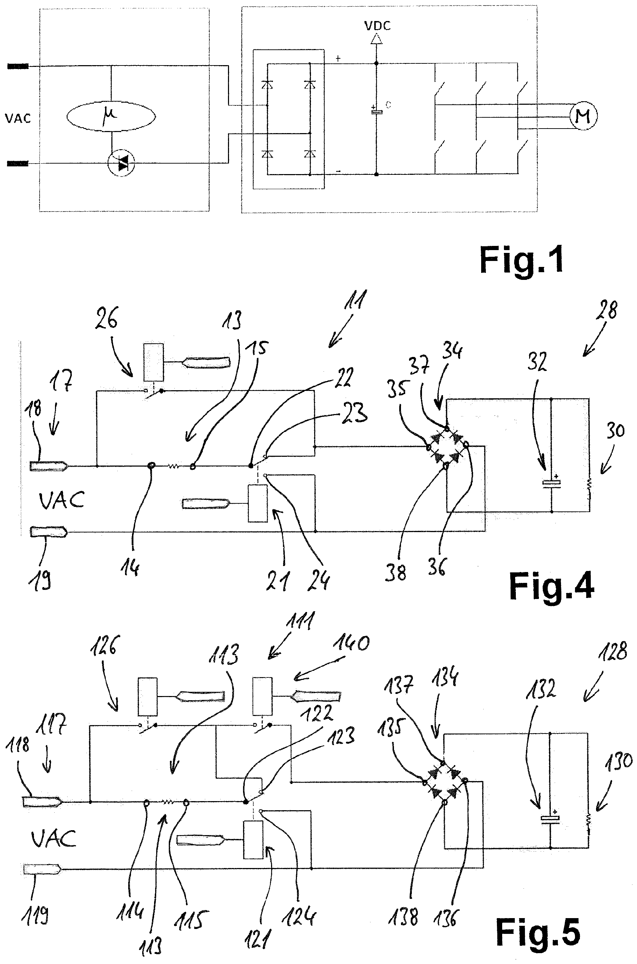

In Fig. 1, a circuit according to the prior art for controlling an electrical pump motor of a washing machine with a rectifier bridge is shown. Between the drum motor and the rectifier bridge a bulk capacitor is provided. A triac connected to a control circuit is provided at the connection to the mains voltage. The triac may limit the inrush current given to the bulk capacitor. This is done by controlling the phase angle during the charging process of the bulk capacitor when switching on the washing machine. The triac will be fired at a given angle when the system is first powered up providing low RMS voltage and therefore reducing the magnitude of charging current. This angle is changed along the time in a proportion that makes the flowing current to be below an allowable and safe value. Once the bulk capacitor has stored enough energy, the triac is locked by the control circuit so that total current demanded by the drum motor flows through the triac. This circuit also allows disconnecting one of the lines supplying the 3-phase inverter motor control, which is in the right part of Fig. 1. This is useful to reduce the stand-by consumption of the washing machine. The triac and the control circuit for the triac can also be provided on the main control board of the washing machine. This triac may also be used to control rotating speed of the drum motor by controlling the angle of a voltage provided to the drum motor.

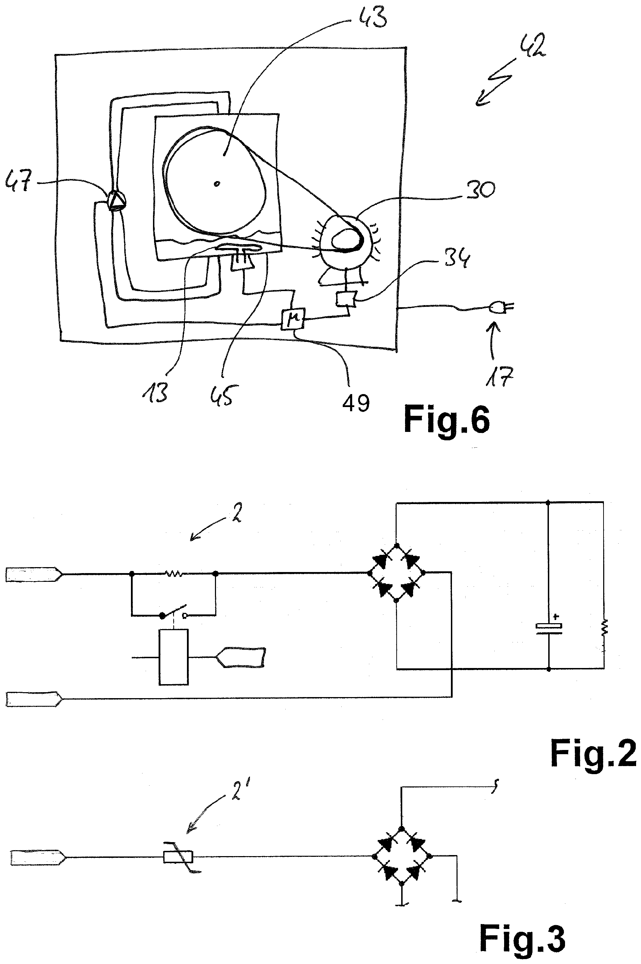

In Fig. 2, another circuit according to the prior art for controlling an electrical pump motor with a rectifier bridge is shown. Here, there is provided a fixed inrush current limiting resistor 2 in series with the voltage source. The resistor 2 must be calculated to stand the inrush current flowing through it. Once bulk capacitor is charged, the resistor 2 is short-cut with a relay. This avoids that the resistor 2 has to be calculated to stand the total current through the motor. Still resistor 2 has to be calculated somewhat bulky to withstand the inrush current.

In Fig. 3, still another circuit according to the prior art is shown. Here, there is provided an NTC resistor 2'. Also this resistor 2'has to be calculated according to some rules, in this case to stand the inrush current flowing through it while resistor 2'is still cold and the total current through the motor when it is warm. This solution is only practicable for small power loads of up to 200 W.

In the invention, however, as depicted in a first embodiment in Fig. 4, there is provided a connecting circuit 11 with an electrical resistance heating element 13 having a first connector 14 and a second connector 15. The first connector 14 is connected to a first pole 18 of a feed voltage 17, which may also be the main voltage. The feed voltage 17 also has a second pole 19.

The second connector 15 of the electrical resistance heating element 13 is connected to the input 22 of a heater relay 21 having a first output 23 and a second output 24. Heater relay 21 is the two ways switching means mentioned above. In parallel to the series connection of the electrical resistance heating element 13 and the heater relay 21 is a door lock switch 26.

To the right of the connecting circuit 11 is a load circuit 28 that comprises the electrical load 30, which is depicted here in a very simplified manner. In an electrical appliance such as a washing machine, this electrical load 30 is a motor, preferably the drum motor, alternatively a pump motor. In parallel to the electrical load 30 a bulk capacitor 32 known from the art is provided. Furthermore, the load circuit 28 has as power regulating means a rectifier bridge 34 with a first input 35, a second input 36, a first output 37 and a second output 38.

The first output 23 of heater relay 21 of connecting circuit 11 is connected to the first input 35 of rectifier bridge 34 of a load circuit 28. The second output 24 of the heater relay 21 is not only connected to the second pole 19 of the feed voltage 17, but also connected to the second input 36 of rectifier bridge 34.

The application in a washing machine or, alternatively, in a dish washing machine, is especially preferable because a heater element to heat the water inside the machine is only used a small amount of time compared to the total working cycle time. So during the time the heating element 13 shall not heat any water, it can be used as a current limiter element and then be connected in series with bulk capacitor 32. When the electrical resistance heating element 13 is needed to heat the water inside the drum, the heater relay 21 goes down and connects the input 22 to the second output 24, which rather directly connects the heating element 13 to the feed voltage 17 for heating action.

Furthermore, it can be seen from Fig. 4 that when the door lock switch 26 is open, which usually is the case when the washing machine is turned on and the problem of the inrush current is most grave, current can be provided to the electrical load 30 only via the heating element 13 working as a current limiter according to the invention. If then door lock switch 26 is closed when the washing machine is ready for action, any current to load circuit 28 passes by the electrical resistance heating element 13 via the door lock switch 26 in the upper branch according to the invention. If then the heating function of electrical resistance heating element 13 is needed again, the heater relay 21 goes down and the heating element 13 is connected via the second output 24 to feed voltage 17. This can be made in addition to the function of the electrical load 30, but in any way independent from it.

Another optional example is shown in Fig. 5 with a connecting circuit 111 comprising an electrical resistance heating element 113 with a first connector 114 and a second connector 115. A feed voltage 117 is provided with a first pole 118 and a second pole 119. There also is a heater relay 121 with an input 122, a first output 123 and a second output 124. In addition to a door lock switch 126 an on/off switching means 140 is provided, which can turn off an electrical load 130 in a load circuit 128 even if door lock switch 126 is closed. Such an on/off switching means usually is provided for safely turning off the electrical load 130.

In load circuit 128 a bulk capacitor 132, which may be a DC capacitor, is provided in parallel with the electrical load 130. There also is provided a rectifier bridge 134 with a first input 135, a second input 136, a first output 137 and a second output 138.

In Fig. 6, a very simple schematic view of a washing machine 42 as an electrical appliance is shown. Washing machine 42 has a drum 43, which is rotated by pump motor 30. Pump motor 30 again is controlled by a rectifier bridge 34, which in this case as a component has integrated a capacitor corresponding to bulk capacitor 32.

In the lower drum basin 45, water is provided, which can be heated by the electrical resistance heating element 13. Water is pumped by a water pump 47, as is known in the art. A control 49 is provided for pump motor 30, electrical resistance heating element 13 and pump motor 47. The cable 17 is plugged in a plug-socket. Furthermore, several switches or relays according to the embodiments of Figs. 4 or 5 may be provided in the washing machine 42, which are not depicted in here. In any way, a person skilled in the art knows how to simply implement them.

## Claims

1. Electrical appliance such as a washing machine (42) or a dishwashing machine with
- an electrical resistance heating element (13, 113), the electrical resistance heating element having two connectors (14, 15, 114, 115), wherein a first connector (14, 114) is connected to a first pole (18, 118) of a feed voltage (17, 117) and wherein a second connector (15, 115) is connected to an input (22, 122) of a two way switching means (21, 121),
- a load circuit (28, 128) comprising an electrical load (30, 130),
wherein:
- the two way switching means (21, 121) is provided with the one input (22, 122) and two outputs (23, 24, 123, 124), wherein the input (22, 122) can be switched to either one of the two outputs (23, 24, 123, 124), wherein the second output (24, 124) is connected to the second pole (19, 119) of the feed voltage (17, 117) and the first output (23, 123) is connected to the load circuit (28, 128),
- a bridge switching means (26, 126) is provided being connected on the first side with the first pole (18, 118) of the feed voltage (17, 117) and with the second side with the first output (23, 123) of the two way switching means (21, 121),
- the bridge switching means (26, 126) is an electro-mechanical switch,
- the bridge switching means is a door lock switch (26, 126) of the electrical appliance, wherein
- when the electrical appliance (42) is turned on, the door lock switch (26, 126) is open and current is provided to the load circuit (28, 128) only via the heating element (13, 113) working as a current limiter, and
- when the electrical appliance (42) is ready for action, the door lock switch (26, 126) is closed and current to the load circuit (28, 128) passes by the electrical resistance heating element (13, 113) via the door lock switch (26, 126).

2. Electrical appliance according to claim 1, wherein the two way switching means (21, 121) is an electro-mechanical magnetic relay.

3. Electrical appliance according to claim 1, wherein the two way switching means comprises at least one triac.

4. Electrical appliance according to one of the preceding claims, wherein the load circuit (28, 128) comprises a rectifier bridge (34, 134) which is provided with two inputs (35, 36, 135, 136) and two outputs (37, 38, 137, 138), wherein the first output (23, 123) of the two way switching means (21, 121) is connected to the first input (35, 135) of the rectifier bridge (34, 134), wherein the second input (36, 136) of the rectifier bridge (34, 134) is connected to the second pole (19, 119) of the feed voltage (17, 117), wherein a capacitor (32, 132) is provided in parallel to the electrical load (30, 130) and connected to the two outputs (37, 38, 137, 138) of the rectifier bridge (34, 134).

5. Electrical appliance according to claim 4, wherein the capacitor (32, 132) is a DC line capacitor.

6. Electrical appliance according to one of the preceding claims, wherein the electrical appliance is a washing machine (42) and the electrical resistance heating element (13, 113) is for heating the water, wherein the electrical load is a drive motor (30) for a drum (43) of the washing machine (42) or a pump motor of a pump (47) of the washing machine.

7. Electrical appliance according to one of claims 1 to 5, wherein the electrical appliance is a dishwashing machine, wherein the electrical resistance heating element (13) is for heating the water in the dishwashing machine and the electrical load (30) is a pump motor of a pump of the dishwashing machine.

8. Electrical appliance according to one of the preceding claims, wherein an additional on/off switching means (140) is provided between the first output (123) of the two way switching means (121) and the input (135) of the load circuit (128) as the only electrical connection between the first output (123) of the two way switching means (121) and the load circuit (128).

9. Method for controlling an electrical appliance (42) such as a washing machine (42) or a dishwashing machine, wherein the electrical appliance is provided with an electrical resistance heating element (13, 113) and a load circuit (28, 128) comprising an electrical load (30, 130), wherein for switching on the electrical appliance (42) the electrical resistance heating element (13, 113) is connected in series with the electrical load (30, 130) to a feed voltage (17, 117) and, after the electrical appliance (42) has been switched on, the series connection is interrupted and the electrical resistance heating element (13, 113) is operated independently from the operation of the load circuit (28, 128) via a two way switching means, wherein:
- a bridge switching means (26, 126) is provided being connected on the first side with the first pole (18, 118) of the feed voltage (17, 117) and with the second side with the first output (23, 123) of the two way switching means (21, 121),
- the bridge switching means (26, 126) is electro-mechanical switch,
- the bridge switching means (126) is a door lock switch of the washing machine or of the dishwashing machine,
wherein
- when the electrical appliance (42) is turned on, the door lock switch (26, 126) is open and current is provided to the load circuit (28, 128) only via the heating element (13, 113) working as a current limiter, and
- when the electrical appliance (42) is ready for action, the door lock switch (26, 126) is closed and current to the load circuit (28, 128) passes by the electrical resistance heating element (13, 113) via the door lock switch (26, 126).

10. Method according to claim 9, wherein the electrical appliance (42) is an electrical appliance according to one of the claims 1 to 8.

## Patentansprüche

1. Elektrisches Gerät wie eine Waschmaschine (42) oder eine Geschirrspülmaschine mit
- einem elektrischen Widerstandsheizelement (13, 113), wobei das elektrische Widerstandsheizelement zwei Verbinder (14, 15, 114, 115) aufweist, wobei ein erster Verbinder (14, 114) mit einem ersten Pol (18, 118) einer Speisespannung (17, 117) verbunden ist, und wobei ein zweiter Verbinder (15, 115) mit einem Eingang (22, 122) eines Zweiwegschaltmittels (21, 121) verbunden ist,
- einem Lastkreis (28, 128), der eine elektrische Last (30, 130) umfasst,
wobei:
- das Zweiwegschaltmittel (21, 121) mit einem Eingang (22, 122) und zwei Ausgängen (23, 24, 123, 124) versehen ist, wobei der Eingang (22, 122) zu einem beliebigen der beiden Ausgänge (23, 24, 123, 124) geschaltet werden kann, wobei der zweite Ausgang (24, 124) mit dem zweiten Pol (19, 119) der Speisespannung (17, 117) verbunden ist und der erste Ausgang (23, 123) mit dem Lastkreis (28, 128) verbunden ist,
- ein Brückenschaltmittel (26, 126) vorgesehen und an der ersten Seite mit dem ersten Pol (18, 118) der Speisespannung (17, 117) und mit der zweiten Seite mit dem ersten Ausgang (23, 123) des Zweiwegschaltmittels (21, 121) verbunden ist,
- das Brückenschaltmittel (26, 126) als elektromechanischer Schalter ausgebildet ist,
- das Brückenschaltmittel (26, 126) als Türverriegelungsschalter (26, 126) des elektrischen Geräts ausgebildet ist,
wobei
- wenn das elektrische Gerät (42) angeschaltet wird, der Türverriegelungsschalter (26, 126) geöffnet ist und dem Lastkreis (28, 128) Strom nur über das als Strombegrenzer wirksame Heizelement (13, 113) zugeführt wird, und
- wenn das elektrische Gerät (42) betriebsbereit ist, der Türverriegelungsschalter (26, 126) geschlossen ist und Strom zum Lastkreis (28, 128) am elektrischen Heizelement (13, 113) vorbei über den Türverriegelungsschalter (26, 126) läuft.

2. Elektrisches Gerät nach Anspruch 1, wobei das Zweiwegschaltmittel (21, 121) als elektromechanisches Magnetrelais ausgebildet ist.

3. Elektrisches Gerät nach Anspruch 1, wobei das Zweiwegschaltmittel mindestens ein Triac umfasst.

4. Elektrisches Gerät nach einem der vorhergehenden Ansprüche, wobei der Lastkreis (28, 128) eine Gleichrichterbrücke (34, 134) umfasst, die mit zwei Eingängen (35, 36, 135, 136) und zwei Ausgängen (37, 38, 137, 138) versehen ist, wobei der erste Ausgang (23, 123) des Zweiwegschaltmittels (21, 121) mit dem ersten Eingang (35, 135) der Gleichrichterbrücke (34, 134) verbunden ist, wobei der zweite Eingang (36, 136) der Gleichrichterbrücke (34, 134) mit dem zweiten Pol (19, 119) der Speisespannung (17, 117) verbunden ist, wobei ein Kondensator (32, 132) parallel zur elektrischen Last (30, 130) vorgesehen und mit den zwei Ausgängen (37, 38, 137, 138) der Gleichrichterbrücke (34, 134) verbunden ist.

5. Elektrisches Gerät nach Anspruch 4, wobei der Kondensator (32, 132) als Gleichstrom-Leitungskondensator ausgebildet ist.

6. Elektrisches Gerät nach einem der vorhergehenden Ansprüche, wobei es sich bei dem elektrischen Gerät um eine Waschmaschine (42) handelt und das elektrische Widerstandsheizelement (13, 113) zum Erwärmen von Wasser dient, wobei es sich bei der elektrischen Last um einen Antriebsmotor (30) für eine Trommel (43) der Waschmaschine (42) oder einen Pumpenmotor einer Pumpe (47) der Waschmaschine handelt.

7. Elektrisches Gerät nach einem der Ansprüche 1 bis 5, wobei sich bei dem elektrischen Gerät um eine Geschirrspülmaschine handelt, wobei das elektrische Widerstandsheizelement (13) zum Erwärmen von Wasser in der Geschirrspülmaschine dient und es sich bei der elektrischen Last (30) um einen Pumpenmotor einer Pumpe der Geschirrspülmaschine handelt.

8. Elektrisches Gerät nach einem der vorhergehenden Ansprüche, wobei ein zusätzliches An-/Aus-Schaltmittel (140) vorgesehen ist zwischen dem ersten Ausgang (123) des Zweiwegschaltmittels (121) und dem Eingang (135) des Lastkreises (128) als einzige elektrische Verbindung zwischen dem ersten Ausgang (123) des Zweiwegschaltmittels (121) und dem Lastkreis (128).

9. Verfahren zum Bedienen eines elektrischen Geräts (42) wie einer Waschmaschine (42) oder einer Geschirrspülmaschine, wobei das elektrische Gerät mit einem elektrischen Widerstandsheizelement (13, 113) und einem Lastkreis (28, 128), der eine elektrische Last (30, 130) umfasst, versehen ist, wobei zum Anschalten des elektrischen Geräts (42) das elektrische Widerstandsheizelement (13, 113) in Reihenschaltung mit der elektrischen Last (30, 130) mit einer Speisespannung (17, 117) verbunden ist, und nachdem das elektrische Gerät (42) angeschaltet wurde, wird die Reihenschaltung unterbrochen und das elektrische Widerstandsheizelement (13, 113) wird unabhängig vom Betrieb des Lastkreises (28, 128) über ein Zweiwegschaltmittel betrieben, wobei:
- ein Brückenschaltmittel (26, 126) vorgesehen und an der ersten Seite mit dem ersten Pol (18, 118) der Speisespannung (17, 117) und mit der zweiten Seite mit dem ersten Ausgang (23, 123) des Zweiwegschaltmittels (21, 121) verbunden ist,
- das Brückenschaltmittel (26, 126) als elektromechanischer Schalter ausgebildet ist,
- das Brückenschaltmittel (126) als Türverriegelungsschalter der Waschmaschine oder der Geschirrspülmaschine ausgebildet ist,
wobei
- wenn das elektrische Gerät (42) angeschaltet wird, der Türverriegelungsschalter (26, 126) geöffnet ist und dem Lastkreis (28, 128) Strom nur über das als Strombegrenzer wirksame Heizelement (13, 113) zugeführt wird, und
- wenn das elektrische Gerät (42) betriebsbereit ist, der Türverriegelungsschalter (26, 126) geschlossen ist und Strom zum Lastkreis (28, 128) am elektrischen Heizelement (13, 113) vorbei über den Türverriegelungsschalter (26, 126) läuft.

10. Verfahren nach Anspruch 9, wobei es sich bei dem elektrischen Gerät (42) um ein elektrisches Gerät nach einem der Ansprüche 1 bis 8 handelt.

## Revendications

1. Appareil électrique tel qu'une machine à laver (42) ou une machine à laver la vaisselle avec
- un élément chauffant à résistance électrique (13, 113), l'élément chauffant à résistance électrique ayant deux connecteurs (14, 15, 114, 115), un premier connecteur (14, 114) étant connecté à un premier pôle (18, 118) d'une tension d'alimentation (17, 117) et un deuxième connecteur (15, 115) étant connecté à une entrée (22, 122) d'un moyen de commutation bidirectionnel (21, 121),
- un circuit de charge (28, 128) comprenant une charge électrique (30, 130),
dans lequel :
- le moyen de commutation bidirectionnel (21, 121) est pourvu de l'entrée (22, 122) et de deux sorties (23, 24, 123, 124), l'entrée (22, 122) pouvant être commutée vers l'une ou l'autre des deux sorties (23, 24, 123, 124), la deuxième sortie (24, 124) étant connectée au deuxième pôle (19, 119) de la tension d'alimentation (17, 117) et la première sortie (23, 123) étant connectée au circuit de charge (28, 128),
- un moyen de commutation en pont (26, 126) est fourni étant connecté sur le premier côté avec le premier pôle (18, 118) de la tension d'alimentation (17, 117) et avec le deuxième côté avec la première sortie (23, 123) du moyen de commutation bidirectionnel (21, 121),
- le moyen de commutation en pont (26, 126) est un commutateur électromécanique,
- le moyen de commutation en pont est un commutateur de verrouillage de porte (26, 126) de l'appareil électrique,
dans lequel
- lorsque l'appareil électrique (42) est allumé, le commutateur de verrouillage de porte (26, 126) est ouvert et du courant est fourni au circuit de charge (28, 128) seulement par l'intermédiaire de l'élément chauffant (13, 113) fonctionnant comme limiteur de courant, et
- lorsque l'appareil électrique (42) est prêt à l'action, le commutateur de verrouillage de porte (26, 126) est fermé et le courant vers le circuit de charge (28, 128) passe par l'élément chauffant à résistance électrique (13, 113) par l'intermédiaire du commutateur de verrouillage de porte (26, 126).

2. Appareil électrique selon la revendication 1, dans lequel le moyen de commutation bidirectionnel (21, 121) est un relais magnétique électromécanique.

3. Appareil électrique selon la revendication 1, dans lequel le moyen de commutation bidirectionnel comprend au moins un triac.

4. Appareil électrique selon l'une des revendications précédentes, dans lequel le circuit de charge (28, 128) comprend un pont redresseur (34, 134) qui est pourvu de deux entrées (35, 36, 135, 136) et de deux sorties (37, 38, 137, 138), la première sortie (23, 123) du moyen de commutation bidirectionnel (21, 121) étant connectée à la première entrée (35, 135) du pont redresseur (34, 134), la deuxième entrée (36, 136) du pont redresseur (34, 134) étant connectée au deuxième pôle (19, 119) de la tension d'alimentation (17, 117), dans lequel un condensateur (32, 132) est fourni en parallèle à la charge électrique (30, 130) et connecté aux deux sorties (37, 38, 137, 138) du pont redresseur (34, 134).

5. Appareil électrique selon la revendication 4, dans lequel le condensateur (32, 132) est un condensateur de ligne CC.

6. Appareil électrique selon l'une des revendications précédentes, l'appareil électrique étant une machine à laver (42) et l'élément chauffant à résistance électrique (13, 113) étant destiné à chauffer l'eau, la charge électrique étant un moteur d'entraînement (30) pour un tambour (43) de la machine à laver (42) ou un moteur de pompe d'une pompe (47) de la machine à laver.

7. Appareil électrique selon l'une des revendications 1 à 5, l'appareil électrique étant une machine à laver la vaisselle, dans lequel l'élément chauffant à résistance électrique (13) est destiné à chauffer l'eau dans la machine à laver la vaisselle et la charge électrique (30) est un moteur de pompe d'une pompe de la machine à laver la vaisselle.

8. Appareil électrique selon l'une des revendications précédentes, dans lequel un moyen de commutation marche/arrêt supplémentaire (140) est fourni entre la première sortie (123) du moyen de commutation bidirectionnel (121) et l'entrée (135) du circuit de charge (128) en tant que seule connexion électrique entre la première sortie (123) du moyen de commutation bidirectionnel (121) et le circuit de charge (128).

9. Procédé de commande d'un appareil électrique (42) tel qu'une machine à laver (42) ou une machine à laver la vaisselle, l'appareil électrique étant pourvu d'un élément chauffant à résistance électrique (13, 113) et d'un circuit de charge (28, 128) comprenant une charge électrique (30, 130), dans lequel pour mettre en marche l'appareil électrique (42) l'élément chauffant à résistance électrique (13, 113) est connecté en série avec la charge électrique (30, 130) à une tension d'alimentation (17, 117) et, après que l'appareil électrique (42) a été mis en marche, la connexion en série est interrompue et l'élément chauffant à résistance électrique (13, 113) est actionné indépendamment de l'actionnement du circuit de charge (28, 128) par l'intermédiaire d'un moyen de commutation bidirectionnel, dans lequel :
- un moyen de commutation en pont (26, 126) est fourni étant connecté sur le premier côté avec le premier pôle (18, 118) de la tension d'alimentation (17, 117) et avec le deuxième côté avec la première sortie (23, 123) du moyen de commutation bidirectionnel (21, 121),
- le moyen de commutation en pont (26, 126) est un commutateur électromécanique,
- le moyen de commutation en pont (126) est un commutateur de verrouillage de porte de la machine à laver ou de la machine à laver la vaisselle,
dans lequel
- lorsque l'appareil électrique (42) est allumé, le commutateur de verrouillage de porte (26, 126) est ouvert et du courant est fourni au circuit de charge (28, 128) seulement par l'intermédiaire de l'élément chauffant (13, 113) fonctionnant en tant que limiteur de courant, et
- lorsque l'appareil électrique (42) est prêt à l'action, le commutateur de verrouillage de porte (26, 126) est fermé et le courant vers le circuit de charge (28, 128) passe par l'élément chauffant à résistance électrique (13, 113) par l'intermédiaire du commutateur de verrouillage de porte (26, 126).

10. Procédé selon la revendication 9, dans lequel l'appareil électrique (42) est un appareil électrique selon l'une des revendications 1 à 8.
